# EUROPEAN PATENT APPLICATION

(11) **EP 4 455 477 A1**
(43) Date of publication of application: **30.10.2024**
(21) Application number: 23170027.9
(22) Date of filing: 26.04.2023
(51) Int. Cl.: F03D 7/02, F03D 17/00

(54) **ACTIVE DAMPING FOR AN OFFSHORE WIND TURBINE DURING IDLING**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

It is described a method of controlling an offshore wind turbine (20) during idling for damping at least one mechanical vibration (21), the wind turbine including a nacelle (18) harboring a generator (11) having a rotor (14) associated with a rotor axis (12), the method comprising: yawing the nacelle (18) to a target yawing angle such that a predetermined angle (α) between a main loading direction (22) and the rotor axis (12) is reached; activating or performing active vibration damping using a generator (11) created torque (26).

## Description

### Field of invention

The present invention relates to a method and a corresponding arrangement of controlling and/or operating an offshore wind turbine during idling for damping at least one mechanical vibration. The present invention further relates to a wind turbine including the arrangement.

### Art Background

Offshore wind turbines are subjected to sea waves and wind which may excite one or more mechanical oscillations of one or more parts of the wind turbine. In particular, larger offshore turbines support structures (such as monopile and tower) may experience during idling (e.g. wave generated) fatigue loads to a substantial percentage. For the idling fatigue loads, the damping of the system (soil, structure, aerodynamic) is of fundamental importance.

The document US 2018/0347542 A1 discloses a system and method for reducing loads during an idling or parked state of a wind turbine via yaw offset away from an incoming wind direction. Thereby, a rotor blade of the wind turbine is monitored for faults and if a fault is detected, the operational status of the wind turbine is determined. If in a predetermined operational status, the nacelle is actively yawed away from an incoming wind direction until either the fault is corrected or cleared and/or the operational status changes.

For offshore wind turbines, wave loads during passive idling may sum up overall to be significant leading to fatigue damage or other problems. For example an offshore-turbine support structure may accumulate a tremendous amount of damage during passive idling, for example if it is installed in a severe wave condition side. This problem may in particular occur during idling, because during operation for energy or power production aerodynamic damping of the rotor may reduce the experienced load. In the so-called "energy harvesting" mode, the turbine system may be able to produce an aerodynamic damping in case of a grid loss. A "energy harvesting" mode of a wind turbine may be capable to produce an aerodynamic damping in case of idling caused by grid loss, when still all internal wind turbine devices are functional. The aerodynamic damping is achieved by maintaining a certain rotor speed.

The "active idling" mode may be able to produce an aerodynamic damping in case of availability of the grid and when still most systems are working.

However, conventionally, there is a significant duration in which the turbine is in passive idling, especially if the pitching system is not available. During this duration the wind turbine is subjected to potentially tremendous loads in an offshore site. Conventionally, the wind turbine is structurally designed for higher loads including the wave induced loads during passive idling.

Thus, there may be a need for a method and a corresponding arrangement of controlling an offshore wind turbine during idling damping at least one mechanical vibration, wherein loads can be reduced, without increasing the complexity of the required equipment or the applied method.

### Summary of the Invention

According to an embodiment of the present invention, it is provided a method of controlling an offshore wind turbine during idling for damping at least one mechanical vibration, the wind turbine including a nacelle harboring a generator having a rotor associated with a rotor axis, the method comprising: yawing the nacelle to a target yawing angle such that a predetermined angle between a main loading direction and the rotor axis is reached; activating or performing active vibration damping using a generator created torque.

The method may for example be performed by a wind turbine controller or a unit or a module of a wind turbine controller and the method may be implemented in software and/or hardware. The wind turbine may be erected or coupled to a support structure. The wind turbine support structure may for example be a floating platform floating on the sea or may include a fixed foundation which is fixed at a sea ground.

The method may be adapted to damp at least one mechanical vibration (also referred to as "oscillation") of for example a system comprised of the nacelle including the rotor blades, the wind turbine tower and the support structure. The entire wind turbine system may for example be excited by environmental influences like at least one sea wave, impacting wind etc. The method may be employed for damping one or more modes of one or more mechanical vibrations of one or more components or one or more groups of components of the wind turbine.

Idling may comprise that the wind turbine does not produce electrical power and in particular that the rotor is not rotating in a single direction. The rotational speed of the rotor may be on average substantially zero. For yawing the nacelle, e.g. setting the orientation of the nacelle and thereby setting the orientation of the rotor axis, the nacelle is rotated or turned substantially around a vertically oriented yawing axis, which substantially coincides with a longitudinal direction of the wind turbine tower.

The target yawing angle may have previously been determined, for example based on the main loading direction. The target yawing angle may be subject to change upon change of the main loading direction. The main loading direction may continuously be monitored, thereby also continuously enabling to continuously update the target yawing angle.

The yawing and/or the active vibration damping may be applied under certain conditions as will be explained below. This may be advantageous, since the operation of the yawing and the performing the active vibration damping may require time and power which needs to be obtained for example from the utility grid or a local storage. The predetermined angle between the main loading direction and the rotor axis may be derived such that by operating the generator to create a torque, the vibration may effectively be damped. Thereby, the generator may generate a torque which is acting substantially along the rotation axis of the rotor or parallel to the rotation axis of the rotor. Thereby, the generator may be utilized to damp a vibration or oscillation (for example of the system comprising portions of the foundation, the wind turbine tower and the nacelle) which have an oscillation axis which is oriented approximately or substantially parallel to the rotation axis of the rotor. For yawing, a conventional yawing system may be utilized where the target yawing angle may be set as an input quantity.

The main loading direction may be defined using different criteria or physical quantities as will be explained below. In one embodiment the main loading direction may substantially be equal to a main oscillation direction of the mechanical vibration. For example the tower including the nacelle may oscillate or vibrate in a vibration plane which is perpendicular to the oscillation axis. When the nacelle is yawed such that the predetermined angle between the main loading direction and the rotor axis is reached (e.g. 90°), the oscillation may effectively be damped. Thereby, the predetermined angle may for example be set such that the main loading direction and the rotor axis are substantially orthogonal to each other. Activating or performing the active vibration damping may for example comprise two supply control signals to the generator in particular to a converter coupled to the generator, wherein the control signals define for example the torque to be generated by the generator in order to dampen the oscillation or vibration.

According to an embodiment of the present invention, activating active vibration damping comprises operating the generator in a motor mode such as to damp the vibration, thereby imposing an oscillating rotor movement with a frequency of the mechanical vibration.

When the generator is operated in the motor mode, the generator is capable of producing a mechanical torque, which may for example counteract any movements of the whole wind turbine system due to the mechanical oscillation. Thereby the rotor may be caused to (for a short time duration) to move or rotate in a clockwise direction alternated with short time movement in the counter-clockwise direction. A net rotational speed of the rotor may be substantially zero. The mechanical vibration to be damped may for example have an oscillation or vibration frequency of between 0.05 Hz and 1 Hz for example. The generator may be controlled to create an oscillating torque which oscillates with the mechanical vibration intended to be damped. Thereby effective damping may be achieved.

According to an embodiment of the present invention the generator is operated to create a torque counteracting the main vibration, in particular to create bending moment on a tower on top of which the nacelle is mounted.

The torque counteracting the main vibration may for example be derived from one or more measurements or information regarding the mechanical vibration, in particular information regarding frequency and/or phase and/or magnitude of the mechanical vibration. The created bending moment may counteract the oscillation or movement of the nacelle entire wind turbine structure, thereby damping the mechanical vibration.

According to an embodiment of the present invention, for operating the generator in motor mode, power is received from a utility grid and/or from a local power storage.

Thus, during performing the method, the wind turbine may be connected to the utility grid and the utility grid may be functional in the sense that it is capable of providing power to the wind turbine. In other embodiments, a local power storage or power providing equipment, like a Diesel generator including equipment for converting the mechanical energy into electrical energy may be utilized. Performing the steps of the method may be restricted to circumstances, when there is a high risk of tremendous or significant damage of fatigue load to components of the wind turbine. Thereby required potentially costly power taken from the grid may be reduced.

According to an embodiment of the present invention, the predetermined angle is in a range between 30° and 150°, or a range between 80° and 100°, in particular 85° and 95°, further in particular substantially 90°.

When the predetermined angle is in the specified range, the rotor blade plane (a plane perpendicular to the rotor axis) may substantially lie in the vibration plane of the mechanical vibration. Thereby, by operating the generator in a motor mode for generating a torque, the oscillation may effectively be damped.

According to an embodiment of the present invention, the main loading direction is one of: a main vibration direction; a main vibration excitation direction; a main wave direction; a main wind direction; a direction based on a combination of one of more of the above direction.

The main vibration direction may be the direction of the vibration or oscillation of the system of the turbine including potentially the foundation, the tower and the nacelle, which may have the largest magnitude or which may have the largest influence on a load of the wind turbine. The main vibration excitation direction may for example be considered as a direction along which a mechanical oscillation is excited. This excitation direction may for example be substantially the main wave direction or to be derived from a combination of the main wave direction and the main wind direction. The main vibration excitation direction may be the direction in which the largest excitation is present. The main wave direction may be the direction of a wave having the highest amplitude or height. The main wind direction may be the direction of the wind having the highest velocity. One or more of the above-mentioned directions may be combined or considered for deriving the main loading direction.

According to an embodiment of the present invention, no electrical power is produced by the wind turbine and/or output to the grid; at least one rotor blade is pitched to reduce, in particular minimize, lift, further in particular pitched to feather; a rotation of the rotor is stopped or is rotating less than 5% or nominal speed; active speed control of the rotor is not possible or is not performed; the wind turbine is in a state after completion of construction before grid connection, wherein the method is in particular performed while active idling is not possible, in particular while a pitch system is not functional for pitching one or more rotor blade coupled to the rotor.

A continuous rotation of the rotor may be stopped but the rotor may perform an oscillating movement for damping the oscillation. An average rotational speed of the rotor when averaged over a time period of for example between 5 seconds and 20 seconds may substantially be zero.

According to an embodiment of the present invention, the method further comprises monitoring at least the main vibration, in particular tower and/or nacelle vibration, in particular regarding direction and/or frequency and/or magnitude and/or phase; operating the generator in a motor mode based on the monitored main vibration; the monitoring in particular comprising: using at least one sensor including at least one of: at least one accelerometer; at least one strain sensor; at least one strain gauge; at least one other load measuring device, wherein the sensor is located in or at least one of: a tower top, a tower bottom, the nacelle, any other part of the wind turbine.

Monitoring the main vibration may involve to measure for example acceleration and/or strain in different components of the wind turbine. For example by measuring a direction of an acceleration, the main vibration direction may be determined. A measured vibration characteristics, for example regarding magnitude and/or phase and/or direction may for example be utilized as a feedback for a controller which supplies control signals to the generator in particular to a converter. Thereby, conventionally available controller equipment may be utilized and greater flexibility is provided for the measuring process regarding required sensors.

According to an embodiment of the present invention, the method further comprises measuring at least a main vibration direction, and in particular a magnitude and/or phase and/or frequency of the main vibration, in particular using one or more accelerometers and/or other sensors installed at or within the nacelle; yawing the nacelle such that the predetermined angle between the main vibration direction and the rotor axis is reached; operating the generator based at least on the magnitude and/or phase and/or frequency of the main vibration.

When the main vibration direction is utilized to define the yawing of the nacelle, this vibration may effectively be damped by operating the generator. The generator may for example be controlled and operated such that the generator creates a torque which is 90° for example or another value out of phase with the vibration motion of the wind turbine system. The oscillation frequency of the torque may be substantially the same as the frequency of the mechanical vibration to be damped.

According to an embodiment of the present invention, the method further comprises yawing the nacelle such that a predetermined angle between a main loading direction and the rotor axis is reached and/or activating active vibration damping using the generator is performed under at least one of the following conditions: the wind turbine is in passive idling for at least a predetermined threshold time span; a wind speed is above a threshold wind speed; a magnitude of the vibration is above a threshold vibration magnitude.

Thereby, the particular method steps may only be applied, when there is a considerable risk, damage or fatigue load acting on components of the wind turbine but not in all situations, in order to save which is required to operate the generator in motor mode.

According to an embodiment of the present invention, the method further comprises monitoring over time and/or updating the target yawing angle; continuing to adjust the yawing angle to the updated target yawing angle when a deviation angle between the target yawing angle and the actual yawing angle is above a threshold yawing angle, in particular 5° or 10° or 15°.

The target yawing angle may be required to be updated, due to changing environmental conditions, in particular due to changing main loading direction. Yawing the nacelle may be relatively time-consuming and thus yawing the nacelle only when there is a considerable change may be advantageous in order to avoid unnecessary yawing. Thereby the method may be improved.

According to an embodiment of the present invention, the method further comprises the wind turbine comprises a converter connected to the generator, the converter being configured to control the generator to be operated in motor mode.

The converter comprises an AC/DC converter portion, a DC-link and a DC/AC converter portion, which together are capable of converting a variable frequency power stream to a substantially fixed frequency power stream. The converter can also cause the generator to produce or generate a torque as required for damping the oscillation.

According to an embodiment of the present invention, the mechanical vibration includes a vibration of at least one of: a tower; a fixed foundation; a floating platform; a support structure; a monopile; a tower-foundation system; a tower-floating platform system; and/or the offshore wind turbine (20) is a fixed foundation wind turbine or a floating wind turbine, and/or the vibration is excited by at least one of: at least one sea wave; impact of wind.

Thereby, damping of a number of different oscillation types may be supported. Further different excitation methods or scenarios may be supported.

It should be understood, that features, individually or in any combination, disclosed, described, explained or applied for a method of controlling an offshore wind turbine during idling for damping at least one mechanical vibration may also, individually or in any combination, be applied or utilized or employed for an arrangement for controlling an offshore wind turbine during idling, according to the embodiments of the present invention and vice versa.

According to an embodiment of the present invention, it is provided an arrangement for controlling an offshore wind turbine during idling for damping at least one mechanical vibration, the wind turbine including a nacelle harboring a generator having a rotor associated with a rotor axis, the arrangement comprising: a determining module adapted to determine a target yawing angle such that a predetermined angle between a main loading direction and the rotor axis is established; a control portion adapted to create a control signal: to yaw the nacelle to the target yawing angle; to activate or perform active vibration damping using a generator created torque.

The arrangement may for example be implemented in software and/or hardware and/or may be a portion of a wind turbine controller. The arrangement may comprise a computing equipment or a processor being capable of executing logical and/or arithmetic operations.

According to embodiments of the present invention, the arrangement may further comprise the yawing system and/or may comprise the generator and also the converter.

According to an embodiment of the present invention, it is provided a wind turbine, in particular adapted for offshore use, comprising: a generator having a rotor associated with a rotor axis; a nacelle harboring the generator; a wind turbine tower on top of which the nacelle is mounted; in particular a foundation or floating platform on which the tower is installed; an arrangement according to the preceding embodiment; in particular one or more of acceleration sensor installed at or within the nacelle.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Fig. 1 illustrates a method diagram of a control method according to an embodiment of the present invention;
Fig. 2 schematically illustrates a wind turbine according to an embodiment of the present invention including an arrangement for controlling the wind turbine according to an embodiment of the present invention; and
Fig. 3 illustrates a block diagram employed for controlling a generator according to an embodiment of the present invention.

### Detailed Description

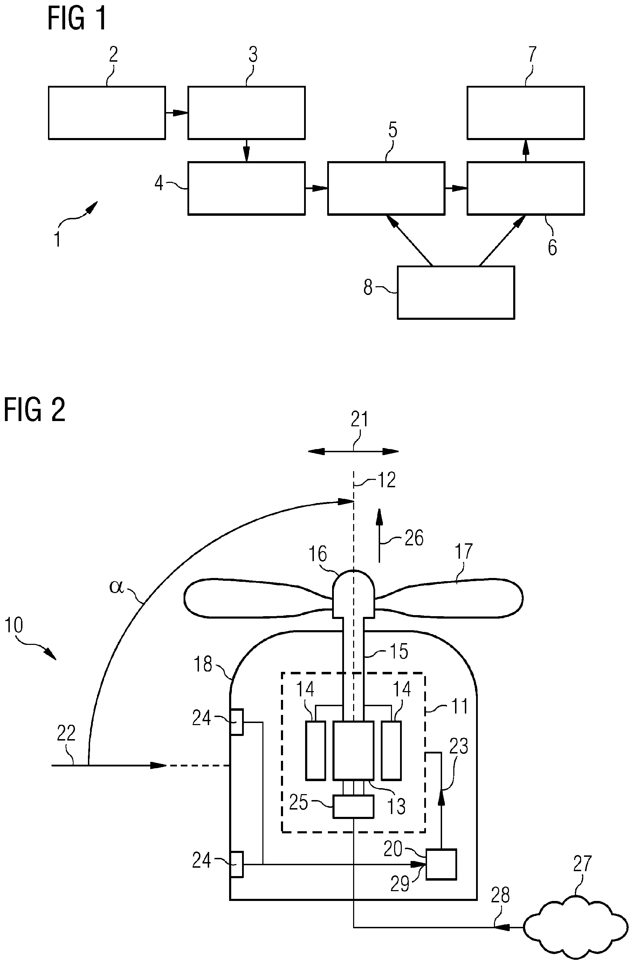

The method diagram 1 illustrated in **Fig. 1** illustrates a method according to an embodiment of the present invention. In a method step 2 a turbine component/system failure is detected. In a method step 3 it is determined that the failure prevents the turbine from active idling (for example the pitch system is faulty and cannot be operated). In a method step 4 a passive idling mode is entered. In a method step 5, the turbine yaws to a predetermined angle between the main loading direction and the rotor axis. In a method step 6 active tower damping is activated and the generator operates in motor mode, wherein the generator generates a damping torque depending on the vibration. In a method step 7 it is determined that the damping is significantly increased. In a method step 8, the nacelle vibration is measured and the respective measurement signals are supplied to the method blocks 5 and 6.

**Fig. 2** schematically illustrates a wind turbine 10 according to an embodiment of the present invention. The wind turbine comprises a generator 11 having a rotor 14 which is associated with a rotor axis 12. In particular the generator 11 comprises a stator 13 and a rotor 14 which is coupled to a main shaft 15 of the wind turbine. At the main shaft 15 or a coupled hub 16 plural rotor blades 17 are mounted. The generator 11 is harboured in a nacelle 18 which is mounted on top of a not illustrated wind turbine tower, which is erected at a wind turbine foundation.

The offshore wind turbine 10 further comprises an arrangement 20 according to an embodiment of the present invention, wherein the arrangement 20 is configured for controlling the offshore wind turbine 10 during idling for damping at least one mechanical vibration.

In the embodiment illustrated in Fig. 2 the wind turbine including potentially the nacelle and a tower exhibits a lateral vibration indicated with reference sign 21. The arrangement 20 comprises a not in detail illustrated determining module adapted to determine a target yawing angle such that a predetermined angle α between a main loading direction 22 and the rotor axis 12 is established. The arrangement 20 further comprises a not in detail illustrated control portion which is adapted to create a control signal in order to yaw the nacelle to the target yawing angle (such that there is the predetermined angle α between the main loading direction 22 and the rotor axis 12). The control portion is further configured to activate or perform active vibration damping using a torque created by the generator 11. The arrangement 20 is for example configured to carry out the method as is schematically illustrated as a method scheme in Fig. 1.

The active tower damping with the generator in motor operation may for example be performed as follows:
The generator is used in a motor mode, to provide active tower damping in idling. For that the wind turbine needs to be yawed such that the main loading direction 21 is in a determined angle to the rotor axis 12. The controller (or arrangement 20) of the turbine sends control signals 23 to the generator in order to cause the generator to produce a torque counteracting the vibrations resulting or being excited for example by a wave or in general the loading direction or loading impact 22. Thereby the generator 11 creates a torque 26 which is counteracting the tower top vibration and thereby contributes to damping the whole mechanical system. Thereby the torque generated by the generator may impose a bending moment at tower top that counteracts the vibration of the tower.

In the embodiment illustrated in Fig. 2, the generator 11 comprises the stator 13, the rotor 14 as well as a converter 25 which is electrically coupled to the stator windings of the stator 13. The arrangement 20 may for example supply control signals 23 to the converter 25 in order to control the entire generator 11. The generator 11 may for example be caused by the control signals 23 of the arrangement 20 to create a mechanical torque 26 which is typically perpendicular to the vibration direction 21 of the nacelle.

The output terminals of the converter 25 are connected or connectable to a utility grid 27 to which under normal conditions and normal operating situation electrical power is supplied to the utility grid 27. During embodiments of the present invention power 28 is received from the grid in order to power the generator system 11 in order to produce the torque 26 for damping the oscillation 21.

The angle α may for example be in the range between 30° and 150°. The direction 22 may represent a main vibration direction or a main vibration excitation direction or a main wave direction or a main wind direction, a combination or a direction derived from a combination of the above-mentioned directions. The idling wind turbine 10 does not supply electrical energy to the utility grid 27 and the average rotational speed of the rotor 15 is zero. Monitoring the main vibration 21 may be performed by receiving the measurement signals 29 from the acceleration sensors 24.

According to an embodiment of the present invention, the method may for example comprise the following steps:
The wind speed is monitored, for example with a wind speed sensor. The operational status of the wind turbine is monitored. The nacelle direction of vibration of the wind turbine is monitored, for example using one or more accelerometers 24 installed at or within the nacelle 18. Accelerometers 24 provide the measurement signals 29 regarding acceleration to the arrangement 20. The arrangement 20 thereby is enabled to determine the mechanical oscillation or vibration, in particular regarding its frequency and/or phase and/or magnitude. Based on the measurement signals 29 and derived characteristics of the mechanical vibration, the arrangement 20 determines and supplies the control signals 23 for controlling the generator 11.

If the operational status is in passive idling mode for a duration exceeding a certain threshold value (for example 1.200s) and the wind speed (for example 600s average value) is above a threshold value (for example 12m/s): then the following steps are performed:
Activate the yaw system in order to yaw the turbine nacelle such that the rotor axis 12 is oriented 90° with respect to the wave direction or main loading direction 22.

Continue to adapt the yaw angle as soon as the difference between the yaw angle and the nacelle direction of vibration exceeds a threshold value (for example 15°). It is noted that the turbine is only in passive idling state if there is a fault in one of the turbine components not allowing it to operate. The passive idling state here means that the pitch system of the turbine is unavailable or non-functional due for example to a fault. For performing the method it may only be necessary that the yawing system, electrical system, the control system and the grid are available and functional.

If the nacelle vibration level exceeds a threshold value (for example as a 600s rms value) the following steps may be performed:
The new operational mode "active tower damping in idling" is activated and performed. The new operational mode may be characterized by a partly power flow from the utility grid to the wind turbine. Wind turbine may use the power to exert a torque by the generator 11 to counteract the vibration 21 of the support structure.

Enabling the tower damper in idling situations might require changes in the conventional electrical system controller and the system level controller such that the electrical system of the wind turbine 10 enables the converter system to allow a power flow from the grid into the wind turbine. Furthermore, the generator 11 is enabled to provide a torque with electrical power received from the utility grid. Further the wind turbine is configured to identify the loading critical situation (and activate/deactivate the "active tower damper in idling" feature or method).

The system level controller thereby controls the yawing system of the wind turbine to bring the yawing angle of the turbine into an angle which is perpendicular to the nacelle main direction of vibration for example. This may be necessary, since the generator torque has to act in the same plane as the nacelle direction of vibration.

Embodiments of the present invention may improve overall system damping for offshore wind turbines which may be subjected to or which may experience significant fatigue loading in particular during idling due to excitation by wave loads and low system damping. Embodiments of the present invention may significantly lower fatigue loads that the wind turbines are conventionally experiencing in idling conditions. Further, mass and costs of the support structure may be reduced.

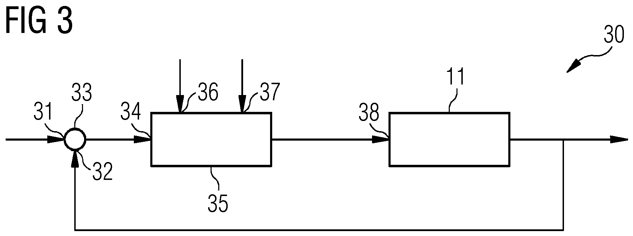

Fig. 3 schematically illustrates a block diagram 30 illustrating controller functions according to embodiments of the present invention. The control scheme 30 receives as an input value a set-point value for a vibration or oscillation, which may for example be zero, the set-point value having the reference sign 31. By some sensor equipment, a feedback value 32 of a measured vibration (for example rms-value of lateral nacelle acceleration) is supplied to the subtraction element 33. The difference value 34 representing the error between the actual vibration 32 and the set-point value 31 is supplied to a control portion 35 which may for example be a portion of a generator controller for active tower damping, for example a PID controller.

The control portion 35 further receives input values 36, 37 regarding triggering the activation of the active tower damper in idling which may for example include wind speed, lateral nacelle acceleration and other input values. When the criteria to perform active tower damping are satisfied, the control module 35 outputs a generator torque or a generator torque control signal 38, which is supplied to a turbine generator 11. The generator 11 upon reception of the control signal 38 generates a torque which counteracts the mechanical vibration.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of controlling an offshore wind turbine (20) during idling for damping at least one mechanical vibration (21), the wind turbine including a nacelle (18) harboring a generator (11) having a rotor (14) associated with a rotor axis (12), the method comprising:
yawing the nacelle (18) to a target yawing angle such that a predetermined angle (α) between a main loading direction (22) and the rotor axis (12) is reached;
activating or performing active vibration damping using a generator (11) created torque (26).

2. Method according to the preceding claim, wherein activating active vibration damping comprises:
operating the generator (11) in a motor mode such as to damp the vibration (21), thereby imposing an oscillating rotor movement with a frequency of the mechanical vibration.

3. Method according to one of the preceding claims, wherein the generator (11) is operated to create a torque (26) counteracting the main vibration, in particular to create bending moment on a tower on top of which the nacelle is mounted.

4. Method according to one of the preceding claims, wherein for operating the generator (11) in motor mode, power (28) is received from a utility grid (27) and/or from a local power storage.

5. Method according to one of the preceding claims, wherein the predetermined angle (α) is in a range between 30° and 150°, in particular 85° and 95°, further in particular substantially 90°.

6. Method according to one of the preceding claims, wherein the main loading direction (22) is one of:
a main vibration direction;
a main vibration excitation direction;
a main wave direction;
a main wind direction;
a direction based on a combination of one of more of the above direction.

7. Method according to one of the preceding claims, wherein idling including at least one of:
no electrical power is produced by the wind turbine (10) and/or output to the grid (27);
at least one rotor blade (17) is pitched to reduce, in particular minimize, lift, further in particular pitched to feather;
a rotation of the rotor (14) is stopped or is rotating less than 5% or nominal speed;
active speed control of the rotor is not possible or is not performed;
the wind turbine is in a state after completion of construction after grid connection,
wherein the method is in particular performed while active idling is not possible, in particular while a pitch system is not functional for pitching one or more rotor blade coupled to the rotor.

8. Method according to one of the preceding claims, further comprising:
monitoring (29) at least the main vibration, in particular tower and/or nacelle vibration, in particular regarding direction and/or frequency and/or magnitude and/or phase;
operating the generator in a motor mode based on the monitored main vibration;
the monitoring in particular comprising:
using at least one sensor including at least one of:
at least one accelerometer (24);
at least one strain sensor;
at least one strain gauge;
at least one other load measuring device,
wherein the sensor is located in or at at least one of:
a tower top, a tower bottom, the nacelle (18), any other part of the wind turbine.

9. Method according to one of the preceding claims, further comprising:
measuring (29) at least the main loading direction, in particular a main vibration direction, and in particular a magnitude and/or phase and/or frequency of the main loading or vibration, in particular using one or more accelerometers and/or other sensors installed at or within the nacelle;
yawing the nacelle (18) such that the predetermined angle (α) between the main loading direction, in particular the main vibration direction (22), and the rotor axis (12) is reached;
operating the generator (11) based at least on the magnitude and/or phase and/or frequency of the main vibration.

10. Method according to one of the preceding claims, wherein yawing the nacelle such that a predetermined angle (α) between a main loading direction (22) and the rotor axis (12) is reached and/or activating active vibration damping using the generator is performed under at least one of the following conditions:
the wind turbine (10) is in passive idling for at least a predetermined threshold time span;
a wind speed is above a threshold wind speed;
a magnitude of the vibration (21) is above a threshold vibration magnitude.

11. Method according to one of the preceding claims, further comprising:
monitoring over time and/or updating the target yawing angle;
continuing to adjust the yawing angle to the updated target yawing angle when a deviation angle between the target yawing angle and the actual yawing angle is above a threshold yawing angle, in particular 5° or 10° or 15°.

12. Method according to one of the preceding claims, wherein the wind turbine (10) comprises a converter (25) connected to or comprised in the generator (11), the converter being configured to control the generator to be operated in motor mode.

13. Method according to one of the preceding claims, wherein the mechanical vibration includes a vibration of at least one of:
a tower;
a fixed foundation;
a floating platform;
a support structure;
a monopile;
a tower-foundation system;
a tower-floating platform system; and/or
the offshore wind turbine (10) is a fixed foundation wind turbine or a floating wind turbine, and/or
the vibration is excited by at least one of:
at least one sea wave;
impact of wind;

14. Arrangement (20) for controlling an offshore wind turbine (10) during idling for damping at least one mechanical vibration (21), the wind turbine including a nacelle (18) harboring a generator (11) having a rotor (14) associated with a rotor axis (12), the arrangement comprising:
a determining module adapted to determine a target yawing angle such that a predetermined angle (α) between a main loading direction (22) and the rotor axis (12) is established;
a control portion adapted to create a control signal:
to yaw the nacelle (18) to the target yawing angle;
to activate or perform active vibration damping using a generator (11) created torque (26).

15. Wind turbine (10), in particular adapted for offshore use, comprising:
a generator (11) having a rotor (14) associated with a rotor axis (12);
a nacelle (18) harboring the generator (11);
a wind turbine tower on top of which the nacelle (18) is mounted;
in particular a foundation or floating platform on which the tower is installed;
an arrangement (20) according to the preceding claim;
in particular one or more of acceleration sensor (24) installed at or within the nacelle (18).
